# EUROPÄISCHE PATENTSCHRIFT

(11) **EP 0 530 788 B1**
(45) Veröffentlichungstag und Bekanntmachung des Hinweises auf die Patenterteilung: **17.04.1996**
(21) Anmeldenummer: 92115020.7
(22) Anmeldetag: 03.09.1992
(51) Int. Cl.: G01B 3/56, G01B 3/06

(54) **Gliedermassstab**
Folding rule
Mètre pliant

(30) Priorität: 05.09.1991 DE 9110993 U
(43) Veröffentlichungstag der Anmeldung: 10.03.1993
(73) Patentinhaber: Kailbach, Alfred, D-74821 Mosbach (DE)
(72) Erfinder: Vorbach, Horst, W-7119 Mulfingen (DE)
(74) Vertreter: Neugebauer, Bernhard

(56) Entgegenhaltungen:
- CH-A- 87 582
- FR-A- 1 070 310
- FR-A- 2 581 752
- US-A- 1 468 598
- US-A- 1 640 604
- US-A- 2 245 321
- US-A- 3 486 232

## Beschreibung

Die Erfindung betrifft einen Gliedermaßstab zum Messen von Längen und von Winkeln, bestehend aus mehreren gelenkig miteinander verbundenen Stabgliedern, von denen zwei benachbarte zum Messen von Winkeln durch einen Zwischenhebel gelenkig miteinander verbunden sind, wobei der Zwischenhebel mit einem Schieber in einer Längsnut in dem als Meßhebel ausgebildeten und zusätzlich eine Winkelskala aufweisenden Stabglied geführt ist.

Aus der US-A-1 640 604 ist bereits ein Gliedermaßstab der eingangs genannten Gattung bekannt, bei dem von drei Stabgliedern die beiden endseitigen am mittleren angelenkt sind. Die freien Enden der beiden äußeren Stabglieder können mit in Längsnuten dieser beiden Stabglieder verschiebbaren Schiebern verbunden werden, denen jeweils eine Winkel skala zugeordnet ist. Damit kann ein Winkelbereich von 5° bis 55° und ein weiterer Winkelbereich von 60° bis 85° gemessen werden. Es kann somit nur ein eingeschränkter Gesamtwinkelbereich erfaßt werden und dies nur nach entsprechender Umstellung der Stabglieder. Ferner ist eine ausreichende Längenmessung nicht gegeben.

Aus der US-A-1 468 598 ist weiterhin ein faltbarer Gliedermaßstab aus zwei gelenkig miteinander verbundenen Stabgliedern bekannt, welche zur Winkelmessung durch einen Zwischenhebel gelenkig miteinander verbunden sind. Letzterer ist auf der Schmalkante des einen Stabgliedes ortsfest und auf dem anderen Stabglied verschiebbar gelagert, so daß der Zwischenhebel das Hochmaß der Stabglieder übersteht. Dadurch wird die Handhabung beim Einschieben in eine und Herausnehmen aus einer Tasche der Arbeitskleidung behindert. Der Zwischenhebel ist abnehmbar und bildet dann ein gesondert aufzubewahrendes Losteil, welches verlegt werden oder verloren gehen kann. Schließlich ist die Winkelskala auf der Schmalkante des Stabgliedes angebracht und somit schwer ablesbar.

In der FR-A-2 581 752 ist ein Gliedermaßstab offenbart, bei dem von vier Stabgliedern die beiden mittleren an dem zu messenden Gegenstand und die beiden äußeren durch Aneinanderschieben zur Messung dienen. Auch hier sind zwei Skalen für zwei Winkelbereiche vorgesehen, die auf jeweils einer Seite des Stabgliedes abgelesen werden müssen, was zu unliebsamen Verwechselungen führen kann. An einem äußeren Stabglied ist noch eine Wasserwaage angeordnet, die jedoch während der einen Winkelmessung nicht einsehbar ist.

Schließlich ist aus der CH-A-87 582 noch ein Gliedermaßstab bekannt, bei dem ein Zwischenhebel in einer Längsnut eines anderen Stabgliedes verschiebbar ist. Die hierfür zugeordnete Winkel skala überbrückt einen Winkelbereich von 0° bis 90°. Für einen größeren Winkelbereich ist dieser Gliedermaßstab nicht geeignet.

Die bekannten Gliedermaßstäbe sind somit im zu messenden Winkelbereich unzureichend und in ihrer Handhabung umständlich.

Aufgabe der Erfindung ist es daher, diese Nachteile zu vermeiden und zu erreichen, daß Längenmaßstab und Winkelmeßeinrichtung immer gleichzeitig und ohne zusätzliche Einstellung zur Hand sind.

Diese Aufgabe wird durch die Erfindung dadurch gelöst, daß der Zwischenhebel im Bereich zwischen dem Meßhebel und dem Nachbar-Stabglied angeordnet und so am Nachbar-Stabglied angelenkt ist, daß der Meßhebel bei durchgehender Winkel anzeige durch den Schieber an der Winkel skala um 180° umklappbar ist.

Die mit der Erfindung erzielten Vorteile bestehen insbesondere darin, daß Maßstab und Winkelmeßeinrichtung ein einheitliches Gerät darstellen, das ständig mitgeführt werden kann und somit immer zur Verfügung steht. Infolge der kleinen Abmessungen, etwa in Größe der bekannten Maßstäbe, kann dieses Gerät bequem in einer Tasche des Arbeitsanzuges untergebracht werden. Bei Nichtgebrauch stehen dem Handwerker somit immer beide Hände für andere Tätigkeiten zur Verfügung, insbesondere, wenn es darum geht, z.B. eine Leiter hochzusteigen. Die Sicherheit am Arbeitsplatz wird damit beträchtlich erhöht. Ferner können die erforderlichen Längen- und Winkelmessungen ohne Zeitverlust hintereinander ausgeführt werden. Der Maßstab nach der Erfindung stellt somit ein vielseitig und praktisch anzuwendendes Gerät dar, das zur Erhöhung der Arbeitsleistung führt.

Weitere Merkmale der Erfindung sind Gegenstand von abhängigen Ansprüchen.

Ausführungsbeispiele der Erfindung sind in der Zeichnung dargestellt und werden im folgenden näher erläutert.
Es zeigen:
Fig. 1 einen als Gliedermaßstab ausgebildeten Maßstab mit der erfindungsgemäßen Einrichtung;
Fig. 2 die Draufsicht auf den Maßstab gem. Fig. 1;
Fig. 3 die Schnittansicht gem. Linie III - III in Fig. 1;
Fig. 4 eine der Schnittansicht gem. Fig. 3 entsprechende Schnittansicht einer anderen Ausführungsform;
Fig. 5 die Schnittansicht einer besonderen Libellenlagerung.

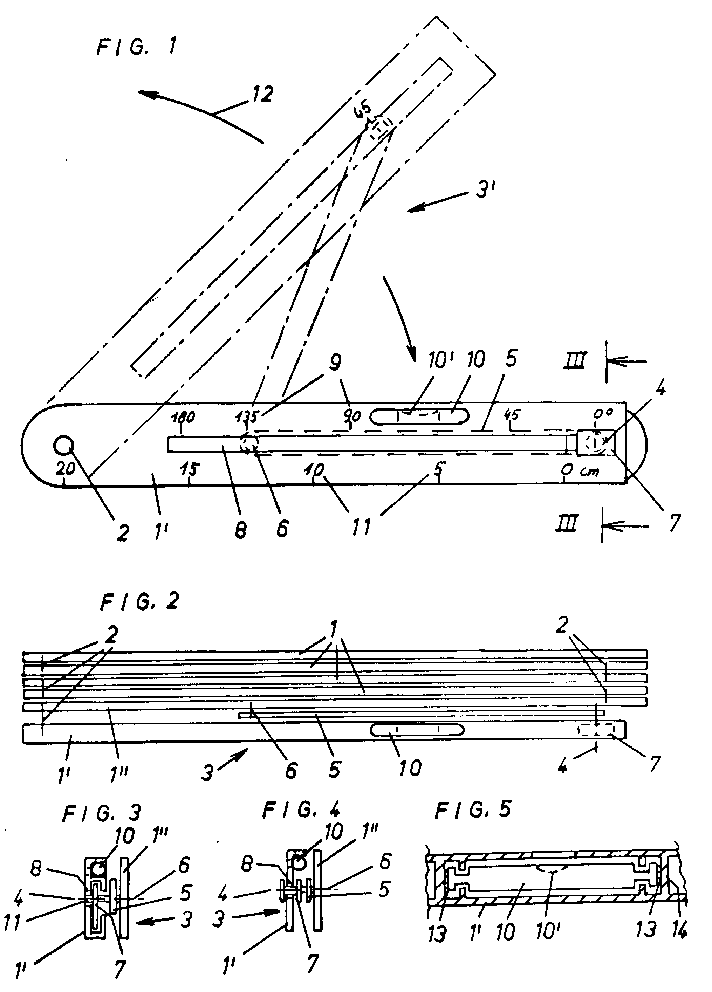

Als Maßstab zur Längenmessung ist als Beispiel in den Fig. 1 und 2 ein Gliedermaßstab dargestellt, der aus mehreren aus im wesentlichen hartem Material, wie Holz, Metall oder Kunststoff, hergestellten Stabgliedern 1 besteht. Diese sind an den Enden durch Scharniere 2 derart gelenkig verbunden, daß die Stabglieder 1 um die Scharniere 2 auseinander geklappt werden können, bis sie maximal alle in Längsrichtung hintereinander liegen.

Vorzugsweise das vordere Stabglied 1 ist als Meßhebel 1' Teil einer Winkelmeßeinrichtung 3. Dieser Meßhebel 1' ist in üblicher Weise durch ein Scharnier 2 mit dem Nachbar-Stabglied 1'' verbunden. Am anderen Ende des Meßhebels 1' ist ebenfalls ein Scharnier 4 vorgesehen für eine Gelenkverbindung mit einem Zwischenhebel 5. Letzterer erstreckt sich zwischen dem Meßhebel 1' und dem Nachbar-Stabglied 1'', parallel zu diesem und über einen Teil der Längenausdehnung des Meßhebels 1'. Am Ende ist er durch ein Scharnier 6 mit dem Nachbar-Stabglied 1'' gelenkig verbunden. Das Scharnier 4 ruht in einem Schieber 7, der in einer Längsnut 8 des Meßhebels 1' verschiebbar gelagert ist. Wird der Meßhebel 1' um das Scharnier 2 gem. Pfeil 12 nach oben geklappt, dann rutscht der Schieber 7 in der Längsnut 8 in Richtung auf das Scharnier 2. Oberhalb der Längsnut 8 ist eine Winkelskala 9 angebracht, deren Auslegung auf die Position des Schiebers 7 in der jeweiligen Winkelstellung des Meßhebels 1' abgestimmt ist. In Fig. 1 ist mit 3' strichpunktiert als Beispiel der Winkelstellung für 45° der Winkelmeßeinrichtung 3 dargestellt. Weitere Winkelgrade sind in der Grundstellung des Meßhebels 1' in Fig. 1 angedeutet. Eine feinere Abstufung der Winkelskala 9 ist selbstverständlich möglich. Der Meßhebel 1' ist so ausgelegt, daß er um 180° umgeklappt werden kann. Zur Längenmessung dient eine Längenskala 11 unterhalb der Längsnut 8.

Um zusätzlich einen Bezug auf die Waagerechte zu erhalten, kann am Meßhebel 1' die Libelle 10 einer Wasserwaage angebracht sein, wie aus den Fig. 1 bis 4 ersichtlich ist. Die jeweilige Stellung der Luftblase 10' in der Libelle 10 kann durch längliche Öffnungen seitlich und oben im Meßhebel 1' erkannt werden. Natürlich kann eine zweite Libelle senkrecht zur genannten Libelle 10 angeordnet sein, um auch die Senkrechte kontrollieren zu können.

Der Meßhebel 1' kann gem. Fig. 3 aus einem U-Profil bestehen, in dessen Ausnehmung der Schieber 7 gelagert ist. Durch das Scharnier 4 ist dieser mit dem Zwischenhebel 5 gelenkig verbunden. Der Schieber 7 besteht hierbei aus einer Platte, die mit einem Anzeigekopf 11 in die Längsnut 8 ragt und so durch eine angebrachte Markierung die jeweilige Winkelstellung anzeigt. Die Libelle 10 ist hierbei oberhalb des Schiebers 7 am Meßhebel 1' befestigt.

Gem. Fig. 4 kann der Schieber 7 aus einem H-förmigen Teil bestehen, der mit seinem verengten Mittelteil in der Längsnut 8 entlanggleitet. Auch hier ist an dem nach außen ragenden Kopfteil eine Markierung angebracht, um die genaue Winkelposition anzuzeigen. Die Libelle 10 ist oberhalb des Schiebers 7 und unterhalb des abgewinkelten Profilteiles angebracht.

Selbstverständlich kann die Winkelmeßeinrichtung 3 auch an einem einstückigen Maßstab angebracht sein. Dann bildet der Meßhebel 1' ein eigenes Teil, der am Stabglied des Meßstabes in beschriebener Weise angelenkt ist.

In weiterer Ausgestaltung der Erfindung kann die Libelle 10 auch in ihrer Winkelstellung gegenüber dem Meßhebel 1' einstellbar gelagert sein. Gem. Fig. 5 ist zu diesem Zweck die Libelle 10 mindestens an einer Stirnseite mit einer Feinverzahnung 13 ausgestattet, die in eine entsprechende Feinverzahnung des Libellenhalters 14 eingreift. Durch seitliches Einstecken eines Schraubendrehers oder eines ähnlichen Werkzeuges durch eine Bohrung kann so die Winkellage der Libelle 10 verändert und einer Meßebene des Meßhebels 1' angepaßt werden. Eine hohe Anpassbarkeit erzielt man durch die Anordnung von Feinverzahnungen 13 an beiden Enden der Libelle 10, wie in Fig. 5 dargestellt ist.

## Patentansprüche

1. Zusammenklappbarer Gliedermaßstab zum Messen von Längen und von Winkeln, bestehend aus mehreren gelenkig miteinander verbundenen Stabgliedern (1), von denen zwei benachbarte zum Messen von Winkeln durch einen Zwischenhebel (5) gelenkig miteinander verbunden sind, wobei der Zwischenhebel (5) mit einem Schieber (7) in einer Längsnut (8) in dem als Meßhebel (1') ausgebildeten und zusätzlich eine Winkelskala (9) aufweisenden Stabglied geführt ist,
dadurch gekennzeichnet,
daß der Zwischenhebel (5) bei zusammengeklapptem Gliedermaßstab im Bereich zwischen dem Meßhebel (1') und dem Nachbar-Stabglied (1") angeordnet und so am Nachbar-Stabglied (1") angelenkt ist, daß der Meßhebel (1') bei durchgehender Winkelanzeige durch den Schieber (7) an der Winkel skala (9) um 180° umklappbar ist.

2. Gliedermaßstab nach Anspruch 1, dadurch gekennzeichnet, daß der Meßhebel (1') als U-förmiges Profil ausgebildet ist, in dessen Ausnehmung der Schieber (7) längsverschiebbar gelagert ist.

3. Gliedermaßstab nach Anspruch 1 und/oder 2, dadurch gekennzeichnet, daß am Meßhebel (1') der Winkelmeßeinrichtung (3) mindestens eine Libelle (10) einer Wasserwaage angeordnet ist.

4. Gliedermaßstab nach Anspruch 3, dadurch gekennzeichnet, daß die Libelle (10) in einem Libellenhalter (14) in der Winkelstellung gegenüber dem Meßhebel (1') einstellbar gelagert ist.

5. Gliedermaßstab nach den Ansprüchen 3 und 4, dadurch gekennzeichnet, daß die Libelle (10) zur Winkeleinstellung mindestens an einem Ende mit einer Feinverzahnung (13) ausgestattet ist, die in eine entsprechende Feinverzahnung des Libellenhalters (14) eingreift.

6. Gliedermaßstab nach mindestens einem der Ansprüche 1 bis 5, dadurch gekennzeichnet, daß das erste oder das letzte Stabglied (1) als Meßhebel (1') der Winkelmeßeinrichtung (3) ausgebildet ist.

7. Gliedermaßstab nach mindestens einem der Ansprüche 1 bis 6, dadurch gekennzeichnet, daß die Längsnut (8) zwischen den Skalen (9,11) für die Winkelmessung und die Längenmessung angeordnet ist.

## Claims

1. Zigzag folding rule for measuring lengths and angles, consisting of multiple hinged sections (1), of which two neighboring ones are hinged together with a connecting lever (5) for measuring angles, whereby the connecting lever (5) is lead with a slide (7) in a longitudinally extending slot (8) in the section which is designed as a measuring lever (1') and which is additionally provided with an angular scale (9),
with the characteristics
that when the folding rule is folded together the connecting lever (5) is positioned in the area between the measuring lever (1') and the neighboring section (1") and is joint to the neighboring section (1") so that the measuring lever (I') can be opened up to 180° while a continuous reading on the angular scale (9) is possible with the aid of the slide.

2. Folding rule according to claim 1, with the characteristics that the measuring lever (1') is constructed as a U-shaped profile in which the lever (7) is seated and can be slided along.

3. Folding rule according to claim 1 and/or 2, with the characteristics that at least one water level bubble (10) is positioned on the measuring lever (1') of the angle measuring device (3).

4. Folding rule according to claim 3, with the characteristics that the bubble (10) is seated in a bubble holder (14) which is adjustable in its angular adjustment in relation to the measuring lever (1').

5. Folding rule according to claims 3 and 4, with the characteristics that for angular adjustment the bubble (10) is equipped with a fine toothing (13) on at least one end which interlocks with the corresponding fine toothing of the bubble holder (14).

6. Folding rule according to at least one of the claims 1 to 5, with the characteristics that the first or the last section (1) is constructed as the measuring lever (1') of the angle measuring device (3).

7. Folding rule according to at least one of the claims 1 to 6, with the characteristics that the longitudinally extending slot (8) between the scales (9, 11) is designed for angular and linear measurement.

## Revendications

1. Mètre pliant repliable pour mesurer des longueurs et des angles, se composant de plusieurs éléments du mètre (1) liés l'un d l'autre d'une façon articulée, dont deux éléments adjacents sont liés l'un à l'autre d'une manière articulée à l'aide d'un levier intermédiaire (5) pour mesurer des angles où le levier intermédiaire (5) est guidé avec une coulisse (7) dans une rainure longitudinale (8) dans l'élément du mètre formé comme levier de mesure et en outre présentant une échelle angulaire (9),
caractérisé au mètre replié du fait que le levier intermédiaire (5) est placé dans la zone entre le levier de mesure (1') et l'élément du mètre voisin (1") et est articulé à l'élément voisin (1") de manière que le levier de mesure (1') soit rabattable de 180° par la coulisse (7) à l'échelle angulaire (9) en cas d'indication d'angle continue.

2. Mètre pliant suivant revendication 1, caractérisé du fait que le levier de mesure (1') est formé comme profil en forme d'U, dans le creux duquel la coulisse (7) tourne sur paliers de manière qu'elle puisse être déplacée longitudinalement.

3. Mètre pliant suivant revendication 1 et/ou 2, caractérisé du fait qu'au moins un niveau à bulle d'air (10) d'un horizon est amenagé au levier de mesure (1') du mécanisme de mesure angulaire (3).

4. Mètre pliant suivant revendication 3, caractérisé du fait que le niveau à bulle d'air (10) tourne sur paliers dans un appui du niveau d bulle d'air (14) et peut être réglé en position angulaire envers le levier de mesure (1').

5. Mètre pliant suivant les revendications 3 et 4, caractérisé du fait qu'au moins un bout du niveau d bulle d'air (10) est pourvu d'une denture fine (13) pour l'ajustage angulaire qui attaque dans une denture fine correspondante de l'appui du niveau à bulle d'air (14).

6. Mètre pliant suivant au moins d'une des revendications 1 à 5, caractérisé du fait que le premier ou le dernier élément du mètre (1) est formé comme levier de mesure (1') du mécanisme de mesure angulaire (3).

7. Mètre pliant suivant au moins d'une des revendications 1 à 6, caractérisé du fait que la minute longitudinale (8) est placée entre les échelles (9, 11) pour la mesure angulaire et la mesure longitudinale.
